# FASCICULE DE BREVET EUROPEEN

(11) **EP 3 442 228 B1**
(45) Date de publication et mention de la délivrance du brevet: **25.03.2020**
(21) Numéro de dépôt: 18196614.4
(22) Date de dépôt: 06.11.2012
(51) Int. Cl.: H04N 19/117, H04N 19/463, H04N 19/18, H04N 19/48, H04N 19/467, H04N 19/176, H04N 19/91

(54) **PROCÉDÉ DE DÉCODAGE D'IMAGES**
VERFAHREN ZUR BILDDEKODIERUNG
METHOD FOR IMAGE DECODING

(30) Priorité: 07.11.2011 FR 1160114
(43) Date de publication de la demande: 13.02.2019
(62) Demande divisionnaire de: 16207516.2
(73) Titulaire: Dolby International AB, 1101 CN Amsterdam Zuid-Oost (NL)
(72) Inventeur: Henry, Felix, 35760 Saint Gregoire (FR); Gordon, Clare, 35740 Pace (FR)
(74) Mandataire: Conroy, John

(56) Documents cités:
- JP-B2- 4 726 141
- ANONYMOUS: "High Efficiency Video Coding (HEVC) Working Draft 4", 97. MPEG MEETING;18-7-2011 - 22-7-2011; TORINO; (MOTION PICTURE EXPERT GROUP OR ISO/IEC JTC1/SC29/WG11),, no. N12186, 2 octobre 2011 (2011-10-02), XP030018681,
- JEAN-MARC THIESSE ET AL: "Rate Distortion Data Hiding of Motion Vector Competition Information in Chroma and Luma Samples for Video Compression", IEEE TRANSACTIONS ON CIRCUITS AND SYSTEMS FOR VIDEO TECHNOLOGY, IEEE SERVICE CENTER, PISCATAWAY, NJ, US, vol. 21, no. 6, 1 juin 2011 (2011-06-01), pages 729-741, XP011325921, ISSN: 1051-8215, DOI: 10.1109/TCSVT.2011.2130330
- SUNG MIN KIM ET AL: "Data Hiding on H.264/AVC Compressed Video", 22 août 2007 (2007-08-22), IMAGE ANALYSIS AND RECOGNITION; [LECTURE NOTES IN COMPUTER SCIENCE], SPRINGER BERLIN HEIDELBERG, BERLIN, HEIDELBERG, PAGE(S) 698 - 707, XP019097872, ISBN: 978-3-540-74258-6 * le document en entier *
- QIMING LI ET AL: "A Reversible Data Hiding Scheme for JPEG Images", 21 septembre 2010 (2010-09-21), ADVANCES IN MULTIMEDIA INFORMATION PROCESSING - PCM 2010, SPRINGER BERLIN HEIDELBERG, BERLIN, HEIDELBERG, PAGE(S) 653 - 664, XP019151677, ISBN: 978-3-642-15701-1 * le document en entier *
- XIAOJING MA ET AL: "A Data Hiding Algorithm for H.264/AVC Video Streams Without Intra-Frame Distortion Drift", IEEE TRANSACTIONS ON CIRCUITS AND SYSTEMS FOR VIDEO TECHNOLOGY, IEEE SERVICE CENTER, PISCATAWAY, NJ, US, vol. 20, no. 10, 1 octobre 2010 (2010-10-01), pages 1320-1330, XP011317382, ISSN: 1051-8215
- HADAR O ET AL: "Rate distortion optimization for efficient watermarking in the DCT domain", BROADBAND MULTIMEDIA SYSTEMS AND BROADCASTING, 2008 IEEE INTERNATIONAL SYMPOSIUM ON, IEEE, PISCATAWAY, NJ, USA, 31 mars 2008 (2008-03-31), pages 1-8, XP031268612, ISBN: 978-1-4244-1648-6
- PARUCHURI J K ET AL: "Joint optimization of data hiding and video compression", CIRCUITS AND SYSTEMS, 2008. ISCAS 2008. IEEE INTERNATIONAL SYMPOSIUM ON, IEEE, PISCATAWAY, NJ, USA, 18 mai 2008 (2008-05-18), pages 3021-3024, XP031392649, ISBN: 978-1-4244-1683-7
- CLARE (ORANGE LABS) G ET AL: "Sign Data Hiding", 7. JCT-VC MEETING; 98. MPEG MEETING; 21-11-2011 - 30-11-2011; GENEVA; (JOINT COLLABORATIVE TEAM ON VIDEO CODING OF ISO/IEC JTC1/SC29/WG11 AND ITU-T SG.16 ); URL: HTTP://WFTP3.ITU.INT/AV-ARCH/JCTVC-SITE/,, no. JCTVC-G271, 8 novembre 2011 (2011-11-08), XP030110255,

## Description

### Domaine de l'invention

La présente invention se rapporte de manière générale au domaine du traitement d'images, et plus précisément au codage et au décodage d'images numériques et de séquences d'images numériques.

L'invention peut ainsi, notamment, s'appliquer au codage vidéo mis en œuvre dans les codeurs vidéo actuels (MPEG, H.264, etc) ou à venir (ITU-T/VCEG (H.265) ou ISO/MPEG (HEVC).

### Arrière-plan de l'invention

Les codeurs vidéo actuels (MPEG, H.264, ...) utilisent une représentation par blocs de la séquence vidéo. Les images sont découpées en macro-blocs, chaque macro-bloc est lui-même découpé en blocs et chaque bloc, ou macro-bloc, est codé par prédiction intra-images ou inter-images. Ainsi, certaines images sont codées par prédiction spatiale (prédiction intra), tandis que d'autres images sont codées par prédiction temporelle (prédiction inter) par rapport à une ou plusieurs images de référence codées-décodées, à l'aide d'une compensation en mouvement connue par l'homme de l'art.

Pour chaque bloc est codé un bloc résiduel, encore appelé résidu de prédiction, correspondant au bloc original diminué d'une prédiction. Les blocs résiduels sont transformés par une transformée de type transformée en cosinus discrète (DCT), puis quantifiés à l'aide d'une quantification par exemple de type scalaire. Des coefficients dont certains sont positifs et d'autres négatifs sont obtenus à l'issue de l'étape de quantification. Ils sont ensuite parcourus dans un ordre de lecture généralement en zigzag (comme dans la norme JPEG), ce qui permet d'exploiter le nombre important de coefficients nuls dans les hautes fréquences. A l'issue du parcours précité, une liste monodimensionnelle de coefficients est obtenue, laquelle sera appelée « résidu quantifié ». Les coefficients de cette liste sont alors codés par un codage entropique.

Le codage entropique (par exemple de type codage arithmétique ou codage de Huffman) est effectué de la façon suivante :
- une information est codée entropiquement pour indiquer l'emplacement du dernier coefficient non nul de la liste,
- pour chaque coefficient situé avant le dernier coefficient non nul, une information est codée entropiquement pour indiquer si le coefficient est nul ou pas,
- pour chaque coefficient non nul indiqué précédemment, une information est codée entropiquement pour indiquer si le coefficient est égal à un ou pas,
- pour chaque coefficient non nul et non égal à un situé avant le dernier coefficient non nul, une information d'amplitude (valeur absolue du coefficient diminuée de deux) est codée entropiquement,
- pour chaque coefficient non nul, le signe qui lui est affecté est codé par un '0' (pour le signe +) ou un '1' (pour le signe -).

Selon la technique H.264 par exemple, lorsqu'un macrobloc est découpé en blocs, un signal de données, correspondant à chaque bloc, est transmis au décodeur. Un tel signal comprend :
- les résidus quantifiés contenus dans la liste précitée,
- des informations représentatives du mode de codage utilisé, en particulier:
   - le mode de prédiction (prédiction intra, prédiction inter, prédiction par défaut réalisant une prédiction pour laquelle aucune information n'est transmise au décodeur (« en anglais « skip »)) ;
   - des informations précisant le type de prédiction (orientation, image de référence, ...) ;
   - le type de partitionnement ;
   - le type de transformée, par exemple DCT 4x4, DCT 8x8, etc...
   - les informations de mouvement si nécessaire ;
   - etc.

Le décodage est fait image par image, et pour chaque image, macrobloc par macrobloc. Pour chaque partition d'un macrobloc, les éléments correspondants du flux sont lus. La quantification inverse et la transformation inverse des coefficients des blocs sont effectuées pour produire le résidu de prédiction décodé. Puis, la prédiction de la partition est calculée et la partition est reconstruite en ajoutant la prédiction au résidu de prédiction décodé.

Le codage intra ou inter par compétition, tel que mis en oeuvre dans la norme H.264, repose ainsi sur la mise en compétition de différentes informations de codage tels que celles précitées, dans le but de sélectionner le meilleur mode, c'est-à-dire celui qui optimisera le codage de la partition considérée selon un critère de performance prédéterminé, par exemple le coût débit/distorsion bien connu de l'homme du métier.

Les informations représentatives du mode de codage sélectionné sont contenues dans le signal de données transmis par le codeur au décodeur. Le décodeur est ainsi capable d'identifier le mode de codage sélectionné au codeur, puis d'appliquer la prédiction conforme à ce mode.

Dans le document « Data Hiding of Motion Information in Chroma and Luma Samples for Video Compression », J.-M. Thiesse, J. Jung and M. Antonini, International workshop on multimédia signal processing, 2011, il est présenté un procédé de dissimulation de données (traduction anglaise de « Data Hiding ») mis en œuvre au cours d'une compression vidéo.

Plus précisément, il est proposé d'éviter d'inclure dans le signal à transmettre au décodeur au moins un index de compétition tel qu'issu d'une pluralité d'index de compétition à transmettre. Un tel index est par exemple l'index MVComp qui représente une information permettant d'identifier le prédicteur de vecteur de mouvement utilisé pour un bloc prédit en mode Inter. Un tel index qui peut valoir 0 ou 1, n'est pas inscrit directement dans le signal de données codées, mais transporté par la parité de la somme des coefficients du résidu quantifié. Une association est créée entre la parité du résidu quantifié et l'index MVComp. A titre d'exemple, la valeur paire du résidu quantifié est associée à l'index MVComp de valeur 0, tandis que la valeur impaire du résidu quantifié est associée à l'index MVComp de valeur 1. Deux cas peuvent se présenter. Dans un premier cas, si la parité du résidu quantifié correspond déjà à celle de l'index MVComp que l'on veut transmettre, le résidu quantifié est codé de façon classique. Dans un deuxième cas, si la parité du résidu quantifié est différente de celle de l'index MVComp que l'on veut transmettre, il est procédé à une modification du résidu quantifié de manière à ce que sa parité soit la même que celle de l'index MVComp. Une telle modification consiste à incrémenter ou décrémenter un ou plusieurs coefficients du résidu quantifié d'une valeur impaire (ex : +1, -1, +3, -3, +5, -+5...) et de ne retenir que la modification qui optimise un critère prédéterminé, en l'occurrence le coût débit-distorsion précité.

Au décodeur, l'index MVComp n'est pas lu dans le signal. Le décodeur se contente simplement de déterminer classiquement le résidu. Si la valeur de ce résidu est paire, l'index MVComp est mis à 0. Si la valeur de ce résidu est impaire, l'index MVComp est mis à 1.

Conformément à la technique qui vient d'être présentée, les coefficients qui subissent la modification ne sont pas toujours choisis de façon optimale, de sorte que la modification appliquée entraîne des perturbations dans le signal transmis au décodeur. De telles perturbations nuisent inévitablement à l'efficacité de la compression vidéo.

Par ailleurs, l'index MVComp ne constitue pas l'information la plus intéressante à dissimuler car les probabilités que cet index soit égal à 0 ou à 1 ne sont pas égales. En conséquence, si cet index est codé de façon classique par un codage entropique, il sera représenté, dans le fichier compressé à transmettre au décodeur, par une quantité de données inférieure à un bit par index MVComp transmis. En conséquence, si l'index MVComp est transmis dans la parité du résidu quantifié, la quantité de données ainsi économisée est inférieure à un bit par index MVComp, alors que la parité du résidu pourrait permettre de transporter une information de un bit par index.

Par conséquent, la réduction du coût de signalisation, de même que l'efficacité de la compression, ne sont pas optimales.

### Objet et résumé de l'invention

Un des buts de l'invention est de remédier à des inconvénients de l'état de la technique précité.

A cet effet, un objet de la présente invention concerne un procédé de décodage d'un signal de données représentatif d'au moins une image découpée en partitions qui a été précédemment codée, une partition courante à décoder contenant des données dont au moins une donnée est affectée d'un signe.

Un tel procédé de décodage est remarquable en ce qu'il comprend, pour la partition courante, les étapes suivantes :
- décodage des données de la partition courante, à l'exclusion du signe,
- calcul de la valeur d'une fonction représentative des données décodées de la partition courante,
- obtention, à partir de la valeur calculée, de la valeur du signe.

Dans un mode de réalisation particulier, une pluralité de valeurs associées respectivement à une pluralité de signes est obtenue à partir de la valeur calculée.

### Brève description des dessins

D'autres caractéristiques et avantages apparaîtront à la lecture de deux modes de réalisation préférés décrits en référence aux figures dans lesquelles:
- la figure 1 représente les étapes générales du procédé de codage selon l'invention,
- la figure 2 représente un dispositif de codage selon l'invention qui est apte à effectuer les étapes du procédé de codage de la figure 1,
- la figure 3 représente un mode de réalisation particulier du procédé de codage selon l'invention,
- la figure 4 représente un mode de réalisation particulier d'un dispositif de codage selon l'invention,
- la figure 5 représente les étapes générales du procédé de décodage selon l'invention,
- la figure 6 représente un dispositif de décodage selon l'invention qui est apte à effectuer les étapes du procédé de décodage de la figure 5,
- la figure 7 représente un mode de réalisation particulier du procédé de décodage selon l'invention,
- la figure 8 représente un mode de réalisation particulier d'un dispositif de décodage selon l'invention.

### Description détaillée de la partie codage

Un mode de réalisation général de l'invention va maintenant être décrit, dans lequel le procédé de codage selon l'invention est utilisé pour coder une séquence d'images selon un flux binaire proche de celui qu'on obtient par un codage selon la norme H.264/MPEG-4 AVC. Dans ce mode de réalisation, le procédé de codage selon l'invention est par exemple implémenté de manière logicielle ou matérielle par modifications d'un codeur initialement conforme à la norme H.264/MPEG-4 AVC.

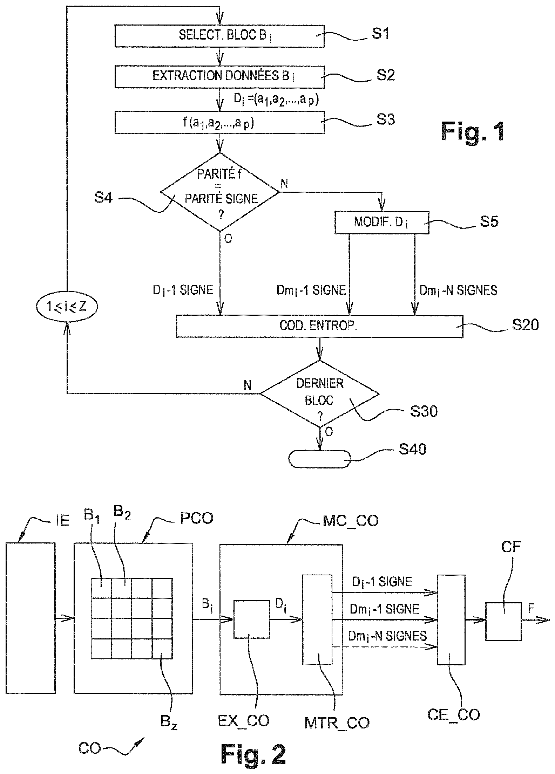

Le procédé de codage selon l'invention est représenté sous la forme d'un algorithme comportant des étapes S1 à S40, représentées à la **figure 1****.**

Selon le mode de réalisation de l'invention, le procédé de codage selon l'invention est implémenté dans un dispositif de codage ou codeur CO dont un mode de réalisation est représenté sur la **figure 2****.**

Conformément à l'invention, il est procédé, préalablement au codage proprement dit, à un découpage d'une image IE d'une séquence d'images à coder dans un ordre prédéterminé, en une pluralité Z de partitions B₁, B₂,...,Bᵢ,..., B_{Z}, comme représenté sur la **figure 2****.**

Il convient de noter qu'au sens de l'invention, le terme « partition » signifie unité de codage (de l'anglais « coding unit »). Cette dernière terminologie est notamment utilisée dans la norme HEVC/H.265 en cours d'élaboration, par exemple dans le document accessible à l'adresse Internet suivante :

### http://phenix.int-evry.fr/jct/doc end user/current document.php?id=3286

En particulier, une telle unité de codage regroupe des ensembles de pixels de forme rectangulaire ou carrée, encore appelés blocs, macroblocs, ou bien des ensembles de pixels présentant d'autres formes géométriques.

Dans l'exemple représenté sur la **figure 2****,** lesdites partitions sont des blocs qui ont une forme carrée et ont tous la même taille. En fonction de la taille de l'image qui n'est pas forcément un multiple de la taille des blocs, les derniers blocs à gauche et les derniers blocs en bas peuvent ne pas être carrés. Dans un mode alternatif de réalisation, les blocs peuvent être par exemple de taille rectangulaire et/ou non alignés les uns avec les autres.

Chaque bloc ou macrobloc peut par ailleurs être lui-même divisé en sous blocs qui sont eux-mêmes subdivisibles.

Un tel découpage est effectué par un module PCO de partitionnement représenté à la **figure 2** qui utilise par exemple un algorithme de partitionnement bien connu en tant que tel.

A la suite de ladite étape de découpage, il est procédé au codage de chacune des partitions courantes Bᵢ (i étant un entier tel que 1≤i≤Z) de ladite image IE.

Dans l'exemple représenté sur la **figure 2****,** un tel codage est appliqué successivement à chacun des blocs B₁ à B_{Z} de l'image courante IE. Les blocs sont codés selon par exemple un parcours tel que le parcours « raster scan » bien connu de l'homme du métier.

Le codage selon l'invention est mis en oeuvre dans un module logiciel de codage MC_CO du codeur CO, tel que représenté sur la **figure 2****.**

Au cours d'une étape S1 représentée à la **figure 1****,** le module de codage MC_CO de la **figure 2** sélectionne comme bloc courant Bᵢ le premier bloc B₁ à coder de l'image courante IE. Comme représenté à la **figure 2****,** il s'agit du premier bloc de gauche de l'image IE.

Au cours d'une étape S2 représentée à la **figure 1****,** il est procédé à l'extraction de données du bloc courant B₁ sous la forme d'une liste D₁= (a₁, a₂, ..., a_{P}). Une telle extraction est effectuée par un module logiciel de EX_CO tel que représenté à la **figure 2****.** De telles données sont par exemple des données pixelliques, les données pixelliques non nulles étant affectées chacune soit d'un signe positif, soit d'un signe négatif.

Chacune des données de la liste D₁ est associée à différentes informations numériques qui sont destinées à subir un codage entropique. De telles informations numériques sont décrites ci-dessous à titre d'exemple.
- pour chaque donnée située avant la dernière donnée non nulle de la liste D₁, une information numérique, telle qu'un bit, est destinée à être codée entropiquement pour indiquer si la donnée est nulle ou pas : si la donnée est nulle, c'est par exemple le bit de valeur 0 qui sera codé, tandis que si la donnée est non nulle, c'est le bit de valeur 1 qui sera codé ;
- pour chaque donnée non nulle, une information numérique, telle qu'un bit, est destinée à être codée entropiquement pour indiquer si la valeur absolue de la donnée est égale à un ou pas : si elle est égale à 1, c'est par exemple le bit de valeur 1 qui sera codé, tandis que si elle est égale à 0, c'est le bit de valeur 0 qui sera codé ;
- pour chaque donnée non nulle dont la valeur absolue est non égale à un et qui est située avant la dernière donnée non nulle, une information d'amplitude est codée entropiquement,
- pour chaque donnée non nulle, le signe qui lui est affecté est codé par une information numérique, telle qu'un bit par exemple mis à '0' (pour le signe +) ou à '1' (pour le signe -).

On va maintenant décrire, en référence à la **figure 1****,** les étapes spécifiques de codage selon l'invention.

Conformément à l'invention, il est décidé d'éviter de coder entropiquement au moins un signe d'une desdites données de la liste D₁.

Conformément au mode de réalisation préféré, c'est le signe de la première donnée non nulle qui est destiné à être caché. Un tel signe est par exemple positif et affecté à la première donnée non nulle, telle par exemple la donnée a₂.

Au cours d'une étape S3 représentée à la **figure 1****,** le module de traitement MTR_CO calcule la valeur d'une fonction f qui est représentative des données de la liste D₁.

Dans le mode préféré de réalisation où un seul signe est destiné à être caché dans le signal à transmettre au décodeur, la fonction f est la parité de la somme des données de la liste D₁.

Au cours d'une étape S4 représentée à la **figure 1****,** le module de traitement MTR_CO vérifie si la parité de la valeur du signe à cacher correspond à la parité de la somme des données de la liste D₁, en vertu d'une convention définie préalablement au codeur CO.

Dans l'exemple proposé, ladite convention est telle qu'un signe positif est associé à un bit de valeur égale à zéro, tandis qu'un signe négatif est associé à un bit de valeur égale à un.

Si, d'après la convention adoptée dans le codeur CO selon l'invention, le signe est positif, ce qui correspond à une valeur de bit de codage à zéro, et que la somme des données de la liste D₁ est paire, il est procédé à une étape S20 de codage entropique des données de la liste D₁ précitée, à l'exception du signe de la première donnée non nulle a₂. Une telle étape S20 est représentée sur la **figure 1****.**

Si, toujours d'après la convention adoptée dans le codeur CO selon l'invention, le signe est négatif, ce qui correspond à une valeur de bit de codage à un, et que la somme des données de la liste D₁ est impaire, il est également procédé à l'étape S20 de codage entropique des données de la liste D₁ précitée, à l'exception du signe de la première donnée non nulle a₂.

Si, d'après la convention adoptée dans le codeur CO selon l'invention, le signe est positif, ce qui correspond à une valeur de bit de codage à zéro, et que la somme des données de la liste D₁ est impaire, il est procédé, au cours d'une étape S5 représentée sur la **figure 1****,** à une modification d'au moins une donnée modifiable de la liste D₁.

Si, toujours d'après la convention adoptée dans le codeur CO selon l'invention, le signe est négatif, ce qui correspond à une valeur de bit de codage à un, et que la somme des données de la liste D₁ est paire, il est également procédé à l'étape S5 de modification d'au moins une donnée modifiable de la liste D₁.

Selon l'invention, une donnée est modifiable si la modification de sa valeur ne provoque pas de désynchronisation au décodeur, une fois que cette donnée modifiée est traitée par le décodeur. Ainsi, le module de traitement MTR_CO est configuré initialement pour ne pas modifier :
- la ou les données nulles situées avant la première donnée non nulle, de façon à ce que le décodeur n'affecte pas la valeur du signe caché à cette ou ces données nulles,
- et pour des raisons de complexité de calcul, la ou les données nulles situées après la dernière donnée non nulle.

Une telle opération de modification est effectuée par le module de traitement MTR_CO de la **figure 2****.**

Dans l'exemple de réalisation proposé, il est supposé que la somme totale des données de la liste D₁ est égale à 5, et est donc impaire. Afin que le décodeur puisse reconstruire le signe positif affecté à la première donnée non nulle a₂, sans que le codeur CO n'ait à transmettre cette donnée au décodeur, il faut que la parité de la somme devienne paire. En conséquence, le module de traitement MTR_CO teste, au cours de ladite étape S5, différentes modifications de données de la liste D₁, visant toutes à changer la parité de la somme des données. Dans le mode préféré de réalisation, il est procédé à l'ajout de +1 ou -1 à chaque donnée modifiable et à la sélection, selon un critère prédéterminé, d'une modification parmi toutes celles qui sont effectuées.

Il est alors obtenu, à l'issue de l'étape S5, une liste modifiée Dm₁=(a'₁, a'₂,..., a'_{P}).

Il convient de noter qu'au cours de cette étape, certaines modifications sont interdites. Ainsi, dans le cas où la première donnée non nulle vaut +1, il ne serait pas possible de lui ajouter -1, car elle deviendrait nulle, et elle perdrait alors sa caractéristique de première donnée non nulle de la liste D₁. Le décodeur attribuerait alors ultérieurement le signe décodé (par calcul de la parité de la somme des données) à une autre donnée, et il y aurait alors une erreur de décodage.

Il est ensuite procédé à l'étape S20 de codage entropique des données de la liste Dm₁ précitée, à l'exception du signe positif de la première donnée non nulle a₂, lequel signe est caché dans la parité de la somme des données.

Il convient de noter que l'ensemble des amplitudes des données de la liste D₁ ou de la liste modifiée Dm₁ est codé avant l'ensemble des signes, à l'exclusion du signe de la première donnée non nulle qui n'est pas codé comme cela a été expliqué ci-dessus.

Au cours d'une étape suivante S30 représentée sur la **figure 1****,** le module de codage MC_CO de la **figure 2** teste si le bloc courant codé est le dernier bloc de l'image IE.

Si le bloc courant est le dernier bloc de l'image IE, au cours d'une étape S40 représentée à la **figure 1****,** il est mis fin au procédé de codage.

Si tel n'est pas le cas, il est procédé à la sélection du bloc suivant Bᵢ qui est alors codé conformément à l'ordre de parcours raster scan précité, par itération des étapes S1 à S20, pour 1≤i≤Z.

Une fois réalisé le codage entropique de tous les blocs B₁ à B_{Z}, il est procédé à la construction d'un signal F représentant, sous forme binaire, lesdits blocs codés.

La construction du signal binaire F est mise en oeuvre dans un module logiciel CF de construction de flux, tel que représenté sur la **figure 2****.**

Le flux F est ensuite transmis par un réseau de communication (non représenté), à un terminal distant. Celui-ci comporte un décodeur qui sera décrit plus en détail dans la suite de la description.

On va maintenant décrire, principalement en référence à la **figure 1**, un autre mode de réalisation de l'invention.

Cet autre mode de réalisation se distingue du précédent uniquement par le nombre de signes à cacher qui est N, N étant un entier tel que N≥2.

A cet effet, la fonction f est le reste modulo 2^{N} de la somme des données de la liste D₁. On suppose que dans l'exemple proposé, N=2, les deux signes à cacher étant les deux premiers signes des deux premières données non nulles de la liste D₁, par exemple a₂ et a₃.

Au cours de l'étape S4 représentée à la **figure 1****,** le module de traitement MTR_CO vérifie si la configuration des N signes, soit 2^{N} configurations possibles, correspond à la valeur du reste modulo 2^{N} de la somme des données de la liste D₁.

Dans l'exemple proposé où N=2, il existe 2²=4 configurations de signes différentes.

Ces quatre configurations obéissent à une convention au codeur CO, laquelle est par exemple déterminée de la façon suivante :
- un reste égal à zéro correspond à deux signes positifs consécutifs : +, + ;
- un reste égal à un correspond à un signe positif et un signe négatif consécutifs : +, - ;
- un reste égal à deux correspond à un signe négatif et un signe positif consécutifs : -, + ;
- un reste égal à trois correspond à deux signes négatifs consécutifs : -, -.

Si la configuration des N signes correspond à la valeur du reste modulo 2^{N} de la somme des données de la liste D₁, il est procédé à l'étape S20 de codage entropique des données de la liste D₁ précitée, à l'exception du signe respectif des deux premières données non nulles a₂ et a₃, lesquels signes sont cachés dans la parité de la somme modulo 2^{N} des données de la liste D₁.

Si tel n'est pas le cas, il est procédé à l'étape S5 de modification d'au moins une donnée modifiable de la liste D₁. Une telle modification est effectuée par le module de traitement MTR_CO de la **figure 2** de telle manière que le reste modulo 2^{N} de la somme des données modifiables de la liste D₁ atteigne la valeur de chacun des deux signes à cacher.

Une liste modifiée Dm₁=(a'₁, a'₂,..., a'_{P}) est alors obtenue.

Il est ensuite procédé à l'étape S20 de codage entropique des données de la liste Dm₁ précitée, à l'exception du signe de la première donnée non nulle a₂ et du signe de la deuxième donnée non nulle a₃, lesquels signes sont cachés dans la parité de la somme modulo 2^{N} des données.

Un mode de réalisation particulier de l'invention va maintenant être décrit, dans lequel le procédé de codage selon l'invention est toujours utilisé pour coder une séquence d'images selon un flux binaire proche de celui qu'on obtient par un codage selon la norme H.264/MPEG-4 AVC. Dans ce mode de réalisation, le procédé de codage selon l'invention est par exemple implémenté de manière logicielle ou matérielle par modifications d'un codeur initialement conforme à la norme H.264/MPEG-4 AVC.

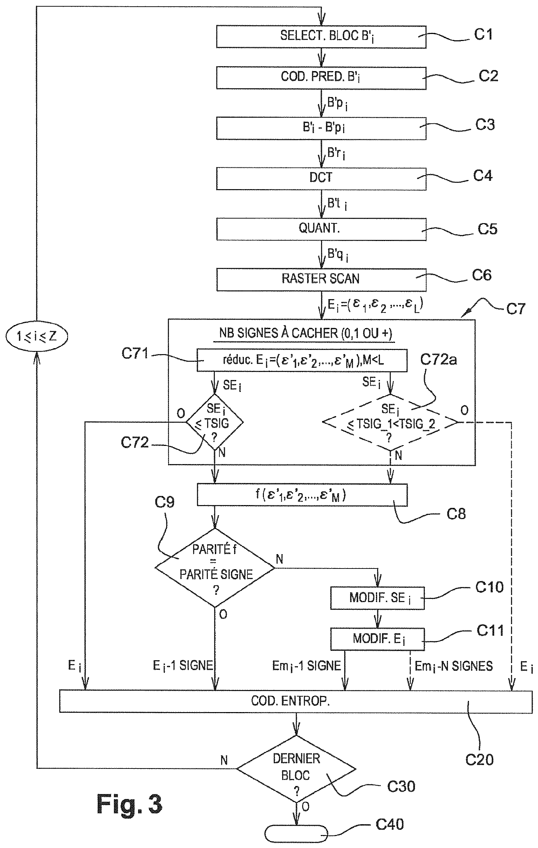

Le procédé de codage selon l'invention est représenté sous la forme d'un algorithme comportant des étapes C1 à C40, telles que représentées à la **figure 3****.**

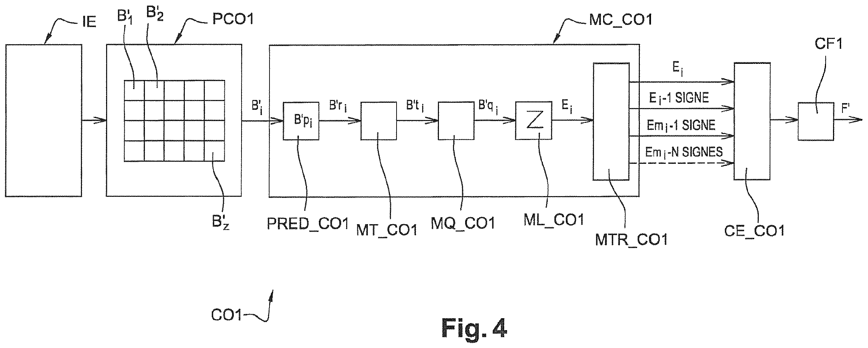

Selon le mode de réalisation de l'invention, le procédé de codage est implémenté dans un dispositif de codage ou codeur CO1 dont un mode de réalisation est représenté sur la **figure 4****.**

Conformément à l'invention, et comme décrit dans les exemples précédents, il est procédé, préalablement au codage proprement dit, à un découpage d'une image IE d'une séquence d'images à coder dans un ordre prédéterminé, en une pluralité Z de partitions B'₁, B'₂,...,B'ᵢ,..., B'_{Z}, comme représenté sur la **figure 4****.**

Dans l'exemple représenté sur la **figure 4****,** lesdites partitions sont des blocs qui ont une forme carrée et ont tous la même taille. En fonction de la taille de l'image qui n'est pas forcément un multiple de la taille des blocs, les derniers blocs à gauche et les derniers blocs en bas peuvent ne pas être carrés. Dans un mode alternatif de réalisation, les blocs peuvent être par exemple de taille rectangulaire et/ou non alignés les uns avec les autres.

Chaque bloc ou macrobloc peut par ailleurs être lui-même divisé en sous blocs qui sont eux-mêmes subdivisibles.

Un tel découpage est effectué par un module logiciel PCO1 de partitionnement représenté à la **figure 4** qui est identique au module de partitionnement PCO représenté à la **figure 2****.**

A la suite de ladite étape de découpage, il est procédé au codage de chacune des partitions courantes B'ᵢ (i étant un entier tel que 1≤i≤Z) de ladite image IE.

Dans l'exemple représenté sur la **figure 4****,** un tel codage est appliqué successivement à chacun des blocs B'₁ à B'_{Z} de l'image courante IE. Les blocs sont codés selon un parcours tel que par exemple le parcours « raster scan » bien connu de l'homme du métier.

Le codage selon l'invention est mis en œuvre dans un module logiciel de codage MC_CO1 du codeur CO1, tel que représenté sur la **figure 4**.

Au cours d'une étape C1 représentée à la **figure 3****,** le module de codage MC_CO1 de la **figure 4** sélectionne comme bloc courant B'ᵢ le premier bloc B'₁ à coder de l'image courante IE. Comme représenté à la **figure 4****,** il s'agit du premier bloc de gauche de l'image IE.

Au cours d'une étape C2 représentée à la **figure 3****,** il est procédé au codage prédictif du bloc courant B'₁ par des techniques connues de prédiction intra et/ou inter, au cours duquel le bloc B'₁ est prédit par rapport à au moins un bloc précédemment codé et décodé. Une telle prédiction est effectuée par un module logiciel de prédiction PRED_CO1 tel que représenté à la **figure 4****.**

Il va de soi que d'autres modes de prédiction intra tels que proposés dans la norme H.264 sont possibles.

Le bloc courant B'₁ peut être également soumis à un codage prédictif en mode inter, au cours duquel le bloc courant est prédit par rapport à un bloc issu d'une image précédemment codée et décodée. D'autres types de prédiction sont bien entendu envisageables. Parmi les prédictions possibles pour un bloc courant, la prédiction optimale est choisie selon un critère débit distorsion bien connu de l'homme du métier.

Ladite étape de codage prédictif précitée permet de construire un bloc prédit B'p₁ qui est une approximation du bloc courant B'₁. Les informations relatives à ce codage prédictif sont destinées à être inscrites dans un signal à transmettre au décodeur. De telles informations comprennent notamment le type de prédiction (inter ou intra), et le cas échéant, le mode de prédiction intra, le type de partitionnement d'un bloc ou macrobloc si ce dernier a été subdivisé, l'indice d'image de référence et le vecteur de déplacement utilisés dans le mode de prédiction inter. Ces informations sont compressées par le codeur CO1.

Au cours d'une étape suivante C3 représentée à la **figure 3****,** le module de prédiction PRED_CO1 compare les données relatives au bloc courant B'₁ aux données du bloc prédit B'p₁. Plus précisément, au cours de cette étape, il est procédé classiquement à la soustraction du bloc prédit B'p₁ du bloc courant B'₁ pour produire un bloc résidu B'r₁.

Au cours d'une étape suivante C4 représentée à la **figure 3****,** il est procédé à la transformation du bloc résidu B'r₁ selon une opération classique de transformation directe, telle que par exemple une transformation en cosinus discrètes de type DCT, pour produire un bloc transformé B't₁. Une telle opération est effectuée par un module logiciel MT_CO1 de transformée, tel que représenté **figure 4****.**

Au cours d'une étape suivante C5 représentée à la **figure 3****,** il est procédé à la quantification du bloc transformé B't₁ selon une opération classique de quantification, telle que par exemple une quantification scalaire. Un bloc B'q₁ de coefficients quantifiés est alors obtenu. Une telle étape est effectuée au moyen d'un module logiciel de quantification MQ_CO1, tel que représenté à la **figure 4****.**

Au cours d'une étape suivante C6 représentée à la **figure 3****,** il est procédé à un parcours, dans un ordre prédéfini, des coefficients quantifiés du bloc B'q₁. Dans l'exemple représenté il s'agit d'un parcours en zigzag classique. Une telle étape est effectuée par un module logiciel de lecture ML_CO1, tel que représenté à la **figure 4****.** A l'issue de l'étape C6, une liste monodimensionnelle E₁=(ε1, ε2,..., εL) de coefficients est obtenue, plus connue sous l'appellation « résidu quantifié », où L est un entier supérieur ou égal à 1. Chacun des coefficients de la liste E₁ est associé à différentes informations numériques qui sont destinées à subir un codage entropique. De telles informations numériques sont décrites ci-dessous à titre d'exemple.

Supposons que dans l'exemple représenté, L=16 et que la liste E₁ contient les seize coefficients suivants : E₁=(0, +9, -7, 0, 0, +1, 0, -1, +2, 0, 0, +1, 0, 0, 0, 0).

En l'espèce :
- pour chaque coefficient situé avant le dernier coefficient non nul de la liste E₁, une information numérique, telle qu'un bit, est destinée à être codée entropiquement pour indiquer si le coefficient est nul ou pas : si le coefficient est nul, c'est par exemple le bit de valeur 0 qui sera codé, tandis que si le coefficient est non nul, c'est le bit de valeur 1 qui sera codé ;
- pour chaque coefficient non nul +9, -7, +1, -1, +2, +1, une information numérique, telle qu'un bit, est destinée à être codée entropiquement pour indiquer si la valeur absolue du coefficient est égale à un ou pas : si elle est égale à 1, c'est par exemple le bit de valeur 1 qui sera codé, tandis que si elle est égale à 0, c'est le bit de valeur 0 qui sera codé ;
- pour chaque coefficient non nul et dont la valeur absolue est non égale à un et situé avant le dernier coefficient non nul, tels les coefficients de valeur +9, -7, +2, une information d'amplitude (valeur absolue du coefficient à laquelle est retranchée la valeur deux) est codée entropiquement,
- pour chaque coefficient non nul, le signe qui lui est affecté est codé par une information numérique, telle qu'un bit par exemple mis à '0' (pour le signe +) ou à '1' (pour le signe -).

On va maintenant décrire, en référence à la **figure 3****,** les étapes spécifiques de codage selon l'invention.

Conformément à l'invention, il est décidé d'éviter de coder entropiquement au moins une des informations numériques précitées, laquelle est au moins un signe d'un desdits coefficients de la liste E₁.

A cet effet, au cours d'une étape C7 représentée à la **figure 3****,** il est procédé au choix du nombre de signes à cacher au cours de l'étape ultérieure de codage entropique. Une telle étape est effectuée par un module logiciel de traitement MTR_CO1, tel que représenté sur la **figure 4****.**

Dans le mode préféré de réalisation, le nombre de signes à cacher est un ou zéro. En outre, conformément audit mode de réalisation préféré, c'est le signe du premier coefficient non nul qui est destiné à être caché. Dans l'exemple représenté, il s'agit donc de cacher le signe du coefficient ε2=+9.

Dans un mode de réalisation alternatif, le nombre de signes à cacher est soit zéro, soit un, soit deux, soit trois, soit plus.

Conformément au mode de réalisation préféré de l'étape C7, il est procédé, au cours d'une première sous-étape C71 représentée à la **figure 3****,** à la détermination, à partir de ladite liste E₁, d'une sous-liste SE₁ contenant des coefficients aptes à être modifiés ε'1, ε'2,.... ε'M où M<L. De tels coefficients seront appelés coefficients modifiables dans la suite de la description.

Selon l'invention, un coefficient est modifiable si la modification de sa valeur quantifiée ne provoque pas de désynchronisation au décodeur, une fois que ce coefficient modifié est traité par le décodeur. Ainsi, le module de traitement MTR_CO1 est configuré initialement pour ne pas modifier :
- le ou les coefficients nuls situés avant le premier coefficient non nul, de façon à ce que le décodeur n'affecte pas la valeur du signe caché à ce ou ces coefficients nuls,
- et pour des raisons de complexité de calcul, le ou les coefficients nuls situés après le dernier coefficient non nul.

Dans l'exemple représenté, à l'issue de la sous-étape C71, la sous-liste SE₁ obtenue est telle que SE₁= (9,-7,0,0,1,0,-1,2,0,0,1). En conséquence, onze coefficients modifiables sont obtenus.

Au cours d'une sous-étape suivante C72 représentée à la **figure 3****,** le module de traitement MTR_CO1 procède à la comparaison du nombre de coefficients modifiables avec un seuil prédéterminé TSIG. Dans le mode préféré de réalisation, TSIG vaut 4.

Si le nombre de coefficients modifiables est inférieur au seuil TSIG, il est procédé, au cours d'une étape C20 représentée à la **figure 3****,** à un codage entropique classique des coefficients de la liste E₁, tel que celui réalisé par exemple dans un codeur CABAC, désigné par la référence CE_CO1 sur la **figure 4****.** A cet effet, le signe de chaque coefficient non nul de la liste E₁ est codé entropiquement.

Si le nombre de coefficients modifiables est supérieur au seuil TSIG, au cours d'une étape C8 représentée à la **figure 3****,** le module de traitement MTR_CO1 calcule la valeur d'une fonction f qui est représentative des coefficients de la sous-liste SE₁.

Dans le mode préféré de réalisation où un seul signe est destiné à être caché dans le signal à transmettre au décodeur, la fonction f est la parité de la somme des coefficients de la sous-liste SE₁.

Au cours d'une étape C9 représentée à la **figure 3****,** le module de traitement MTR_CO1 vérifie si la parité de la valeur du signe à cacher correspond à la parité de la somme des coefficients de la sous-liste SE₁, en vertu d'une convention définie préalablement au codeur CO1.

Dans l'exemple proposé, ladite convention est telle qu'un signe positif est associé à un bit de valeur égale à zéro, tandis qu'un signe négatif est associé à un bit de valeur égale à un.

Si, d'après la convention adoptée dans le codeur C01 selon l'invention, le signe est positif, ce qui correspond à une valeur de bit de codage à zéro, et que la somme des coefficients de la sous-liste SE₁ est paire, il est procédé à l'étape C20 de codage entropique des coefficients de la liste E₁ précitée, à l'exception du signe du coefficient ε2.

Si, toujours d'après la convention adoptée dans le codeur CO1 selon l'invention, le signe est négatif, ce qui correspond à une valeur de bit de codage à un, et que la somme des coefficients de la sous-liste SE₁ est impaire, il est également procédé à l'étape C20 de codage entropique des coefficients de la liste E₁ précitée, à l'exception du signe du coefficient ε2.

Si, d'après la convention adoptée dans le codeur CO1 selon l'invention, le signe est positif, ce qui correspond à une valeur de bit de codage à zéro, et que la somme des coefficients de la sous-liste SE₁ est impaire, il est procédé, au cours d'une étape C10 représentée sur la **figure 3****,** à une modification d'au moins un coefficient modifiable de la sous-liste SE₁.

Si, toujours d'après la convention adoptée dans le codeur CO1 selon l'invention, le signe est négatif, ce qui correspond à une valeur de bit de codage à un, et que la somme des coefficients de la sous-liste SE₁ est paire, il est également procédé à l'étape C10 de modification d'au moins un coefficient modifiable de la sous-liste SE₁.

Une telle opération de modification est effectuée par le module de traitement MTR_CO1 de la **figure 4****.**

Dans l'exemple de réalisation où SE₁=(+9,-7,0,0,+1,0,-1,+2,0,0,+1), la somme totale des coefficient est égale à 5, et est donc impaire. Afin que le décodeur puisse reconstruire le signe positif affecté au premier coefficient non nul, ε2=±9, sans que le codeur CO1 n'ait à transmettre ce coefficient au décodeur, il faut que la parité de la somme devienne paire. En conséquence, le module de traitement MTR_CO1 teste, au cours de ladite étape C10, différentes modifications de coefficients de la sous-liste SE₁, visant toutes à changer la parité de la somme des coefficients. Dans le mode préféré de réalisation, il est procédé à l'ajout de +1 ou -1 à chaque coefficient modifiable et à la sélection d'une modification parmi toutes celles qui sont effectuées.

Dans le mode préféré de réalisation, une telle sélection constitue la prédiction optimale selon un critère de performance qui est par exemple le critère débit distorsion bien connu de l'homme du métier. Un tel critère s'exprime par l'équation (1) ci-dessous:
(1) J=D+λR où
D représente la distorsion entre le macrobloc original et le macrobloc reconstruit, R représente le coût en bits du codage des informations de codage et λ représente un multiplicateur de Lagrange, dont la valeur peut être fixée préalablement au codage.

Dans l'exemple proposé, la modification qui entraîne une prédiction optimale selon le critère débit-distorsion précité est l'ajout de la valeur 1 au deuxième coefficient -7 de la sous-liste SE₁.

Il est alors obtenu, à l'issue de l'étape C10, une sous-liste modifiée SEm₁=(+9,+6,0,0,+1,0,-1,+2,0,0,+1)

Il convient de noter qu'au cours de cette étape, certaines modifications sont interdites. Ainsi, dans le cas où le premier coefficient non nul ε2 aurait valu +1, il n'aurait pas été possible de lui ajouter -1, car il serait devenu nul, et il aurait alors perdu sa caractéristique de premier coefficient non nul de la liste E₁. Le décodeur aurait alors attribué ultérieurement le signe décodé (par calcul de la parité de la somme des coefficients) à un autre coefficient, et il y aurait alors eu une erreur de décodage.

Au cours d'une étape C11 représentée à la **figure 3****,** le module de traitement MTR_CO1 procède à une modification correspondante de la liste E₁. La liste modifiée suivante Em₁= (0,+9,-6,0,0,+1,0,-1,+2,0,0,+1,0,0,0,0) est alors obtenue.

Il est ensuite procédé à l'étape C20 de codage entropique des coefficients de la liste Em₁ précitée, à l'exception du signe du coefficient ε2, qui est le signe + du coefficient 9 dans l'exemple proposé, lequel signe est caché dans la parité de la somme des coefficients.

Il convient de noter que l'ensemble des amplitudes des coefficients de la liste E₁ ou de la liste modifiée Em₁ est codé avant l'ensemble des signes, à l'exclusion du signe du premier coefficient non nul ε2 qui n'est pas codé, comme cela a été expliqué ci-dessus.

Au cours d'une étape suivante C30 représentée à la **figure 3****,** le module de codage MC_CO1 de la **figure 4** teste si le bloc courant codé est le dernier bloc de l'image IE.

Si le bloc courant est le dernier bloc de l'image IE, au cours d'une étape C40 représentée à la **figure 3****,** il est mis fin au procédé de codage.

Si tel n'est pas le cas, il est procédé à la sélection du bloc suivant B'ᵢ qui est alors codé conformément à l'ordre de parcours raster scan précité, par itération des étapes C1 à C20, pour 1≤i≤Z.

Une fois réalisé le codage entropique de tous les blocs B'₁ à B'_{Z}, il est procédé à la construction d'un signal F' représentant, sous forme binaire, lesdits blocs codés.

La construction du signal binaire F' est mise en œuvre dans un module logiciel CF1 de construction de flux, tel que représenté sur la **figure 4****.**

Le flux F' est ensuite transmis par un réseau de communication (non représenté), à un terminal distant. Celui-ci comporte un décodeur qui sera décrit plus en détail dans la suite de la description.

On va maintenant décrire, principalement en référence à la **figure 3****,** un autre mode de réalisation de l'invention.

Cet autre mode de réalisation se distingue du précédent uniquement par le nombre de coefficients à cacher qui est soit 0, soit N, N étant un entier tel que N≥2.

A cet effet, la sous-étape de comparaison C72 précitée est remplacée par la sous-étape C72a représentée en pointillé sur la **figure 3****,** au cours de laquelle il est procédé à la comparaison du nombre de coefficients modifiables avec plusieurs seuils prédéterminés 0<TSIG_1<TSIG_2<TSIG_3...., de telle façon que si le nombre de coefficients modifiables est compris entre TSIG_N et TSIG_N+1, N signes sont destinés à être cachés.

Si le nombre de coefficients modifiables est inférieur au premier seuil TSIG_1, il est procédé, au cours de l'étape C20 précitée, au codage entropique classique des coefficients de la liste E₁. A cet effet, le signe de chaque coefficient non nul de la liste E₁ est codé entropiquement.

Si le nombre de coefficients modifiables est compris entre le seuil TSIG_N et TSIG_N+1, au cours d'une étape C8 représentée à la **figure 3****,** le module de traitement MTR_CO1 calcule la valeur d'une fonction f qui est représentative des coefficients de la sous-liste SE₁.

Dans cet autre mode de réalisation, la décision au codeur étant de cacher N signes, la fonction f est le reste modulo 2^{N} de la somme des coefficients de la sous-liste SE₁. On suppose que dans l'exemple proposé, N=2, les deux signes à cacher étant les deux premiers signes des deux premiers coefficients non nuls respectivement, à savoir ε2 et ε3.

Au cours de l'étape suivante C9 représentée à la **figure 3****,** le module de traitement MTR_CO1 vérifie si la configuration des N signes, soit 2^{N} configurations possibles, correspond à la valeur du reste module 2^{N} de la somme des coefficients de la sous-liste SE₁.

Dans l'exemple proposé où N=2, il existe 2²=4 configurations de signes différentes.

Ces quatre configurations obéissent à une convention au codeur C01, laquelle est par exemple déterminée de la façon suivante :
- un reste égal à zéro correspond à deux signes positifs consécutifs : +, + ;
- un reste égal à un correspond à un signe positif et un signe négatif consécutifs : +, - ;
- un reste égal à deux correspond à un signe négatif et un signe positif consécutifs : -, + ;
- un reste égal à trois correspond à deux signes négatifs consécutifs : -, -.

Si la configuration des N signes correspond à la valeur du reste modulo 2^{N} de la somme des coefficients de la sous-liste SE₁, il est procédé à l'étape C20 de codage entropique des coefficients de la liste E₁ précitée, à l'exception du signe du coefficient ε2 et du coefficient ε3, lesquels signes sont cachés dans la parité de la somme modulo 2^{N} des coefficients.

Si tel n'est pas le cas, il est procédé à l'étape C10 de modification d'au moins un coefficient modifiable de la sous-liste SE₁. Une telle modification est effectuée par le module de traitement MTR_CO1 de la **figure 4****,** de telle manière que le reste modulo 2^{N} de la somme des coefficients modifiables de la sous-liste SE₁ atteigne la valeur de chacun des deux signes à cacher.

Au cours de l'étape C11 précitée, le module de traitement MTR_CO1 procède à une modification correspondante de la liste E₁. Une liste modifiée Em₁ est alors obtenue.

Il est ensuite procédé à l'étape C20 de codage entropique des coefficients de la liste Em₁ précitée, à l'exception du signe du coefficient ε2 et du signe du coefficient ε3, lesquels signes sont cachés dans la parité de la somme modulo 2^{N} des coefficients.

### Description détaillée de la partie décodage

Un mode de réalisation général du procédé de décodage selon l'invention va maintenant être décrit, dans lequel le procédé de décodage est implémenté de manière logicielle ou matérielle par modifications d'un décodeur initialement conforme à la norme H.264/MPEG-4 AVC.

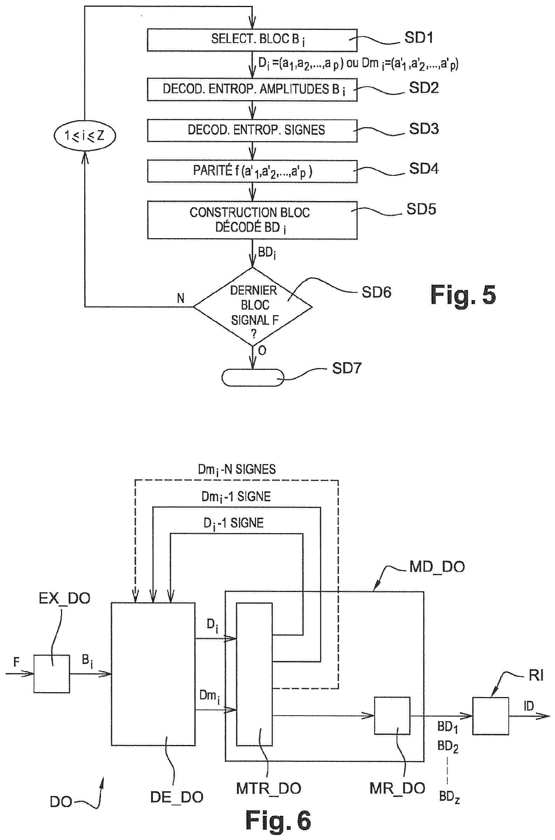

Le procédé de décodage selon l'invention est représenté sous la forme d'un algorithme comportant des étapes SD1 à SD7 représentées à la **figure 5****.**

Selon le mode de réalisation général de l'invention, le procédé de décodage selon l'invention est implémenté dans un dispositif de décodage ou décodeur DO, tel que représenté à la **figure 6****,** qui est adapté à recevoir le flux F délivré par le codeur CO de la **figure 2****.**

Au cours d'une étape préliminaire non représentée sur la **figure 5****,** il est procédé à l'identification, dans le signal de données F reçu, des partitions B₁ à B_{Z} qui ont été codées précédemment par le codeur CO. Dans le mode préféré de réalisation, lesdites partitions sont des blocs qui ont une forme carrée et ont tous la même taille. En fonction de la taille de l'image qui n'est pas forcément un multiple de la taille des blocs, les derniers blocs à gauche et les derniers blocs en bas peuvent ne pas être carrés. Dans un mode alternatif de réalisation, les blocs peuvent être par exemple de taille rectangulaire et/ou non alignés les uns avec les autres.

Chaque bloc ou macrobloc peut par ailleurs être lui-même divisé en sous blocs qui sont eux-mêmes subdivisibles.

Une telle identification est effectuée par un module logiciel EX_DO d'analyse de flux, tel que représenté à la **figure 6****.**

Au cours d'une étape SD1 représentée à la **figure 5****,** le module EX_DO de la **figure 6** sélectionne comme bloc courant Bᵢ le premier bloc B₁ à décoder. Une telle sélection consiste par exemple à placer un pointeur de lecture dans le signal F au début des données du premier bloc B₁.

Il est ensuite procédé au décodage de chacun des blocs codés sélectionnés.

Dans l'exemple représenté sur la **figure 5****,** un tel décodage est appliqué successivement à chacun des blocs codés B₁ à B_{Z}. Les blocs sont décodés selon par exemple un parcours « raster scan » bien connu de l'homme du métier.

Le décodage selon l'invention est mis en œuvre dans un module logiciel de décodage MD_DO du décodeur DO, tel que représenté sur la **figure 6****.**

Au cours d'une étape SD2 représentée à la **figure 5****,** il est d'abord procédé au décodage entropique du premier bloc courant B₁ qui a été sélectionné. Une telle opération est effectuée par un module de décodage entropique DE_DO représenté sur la **figure 6****,** par exemple de type CABAC. Au cours de cette étape, le module DE_DO effectue un décodage entropique des informations numériques correspondant à l'amplitude de chacune des données codées de la liste D₁ ou de la liste modifiée Dm₁. A ce stade, seuls les signes des données de la liste D₁ ou de la liste modifiée Dm₁ ne sont pas décodés.

Dans le cas où le module de traitement MTR_DO reçoit la liste D₁= (a₁, a₂,..., a_{P}), il est procédé, au cours d'une étape SD3 représentée à la **figure 5****,** à un décodage entropique classique de tous les signes des données de la liste D₁. Un tel décodage est effectué par le décodeur CABAC, désigné par la référence DE_DO sur la **figure 6****.** A cet effet, le signe de chaque donnée non nulle de la liste D₁ est décodé entropiquement.

Dans le cas où le module de traitement MTR_DO reçoit la liste modifiée Dm₁=(a'₁, a'₂,...,a'_{P}), il est procédé, au cours de ladite étape SD3, au décodage entropique classique de tous les signes des données de la liste Dm₁, à l'exception du signe de la première donnée non nulle a2.

Au cours d'une étape SD4 représentée à la **figure 5****,** le module de traitement MTR_DO calcule la valeur d'une fonction f qui est représentative des données de la liste Dm₁, de façon à déterminer si la valeur calculée est paire ou impaire.

Dans le mode préféré de réalisation où un seul signe est caché dans le signal F, la fonction f est la parité de la somme des données de la liste Dm₁.

Conformément à la convention utilisée au codeur CO, qui est la même au décodeur DO, une valeur paire de la somme des données de la liste Dm₁ signifie que le signe de la première donnée non nulle de la liste modifiée Dm₁ est positif, tandis qu'une valeur impaire de la somme des données de la liste Dm₁ signifie que le signe de la première donnée non nulle de la liste modifiée Dm₁ est négatif.

Dans l'exemple de réalisation, la somme totale des données est paire. En conséquence, à l'issue de l'étape SD4, le module de traitement MTR_DO en déduit que le signe caché de la première donnée non nulle a2 est positif.

Au cours d'une étape SD5 représentée à la **figure 5****,** il est procédé à la construction du bloc décodé BD₁. Une telle opération est effectuée par un module logiciel de reconstruction MR_DO représenté à la **figure 6****.**

Au cours d'une étape SD6 représentée à la **figure 5****,** le module de décodage MD_DO teste si le bloc courant décodé est le dernier bloc identifié dans le signal F.

Si le bloc courant est le dernier bloc du signal F, au cours d'une étape SD7 représentée à la **figure 5****,** il est mis fin au procédé de décodage.

Si tel n'est pas le cas, il est procédé à la sélection du bloc suivant Bᵢ à décoder, conformément à l'ordre de parcours raster scan précité, par itération des étapes SD1 à SD5, pour 1≤i≤Z.

On va maintenant décrire, principalement en référence à la **figure 5****,** un autre mode de réalisation de l'invention.

Cet autre mode de réalisation se distingue du précédent uniquement par le nombre de signes cachés qui est maintenant égal à N, N étant un entier tel que N≥2.

A cet effet, au cours de l'étape SD3 précitée, il est procédé au décodage entropique classique de tous les signes des données de la liste Dm₁, à l'exception des N signes respectifs des premières données non nulles de ladite liste modifiée Dm₁, lesdits N signes étant cachés.

Dans cet autre mode de réalisation, le module de traitement MTR_DO calcule, au cours de l'étape SD4, la valeur de la fonction f qui est le reste modulo 2^{N} de la somme des données de la liste Dm₁. On suppose que dans l'exemple proposé, N=2.

Le module de traitement MTR_DO en déduit alors la configuration des deux signes cachés qui sont affectés respectivement à chacune des deux premières données non nulles a2 et a3, selon la convention utilisée au codage.

Une fois ces deux signes reconstruits, il est procédé à la mise en œuvre des étapes SD5 à SD7 décrites ci-dessus.

Un mode de réalisation particulier du procédé de décodage selon l'invention va maintenant être décrit, dans lequel le procédé de décodage est implémenté de manière logicielle ou matérielle par modifications d'un décodeur initialement conforme à la norme H.264/MPEG-4 AVC.

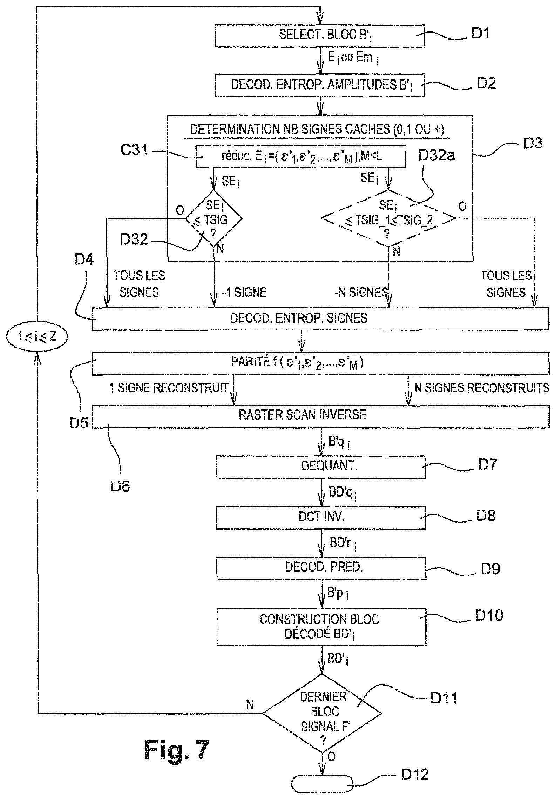

Le procédé de décodage selon l'invention est représenté sous la forme d'un algorithme comportant des étapes D1 à D12 représentées à la **figure 7****.**

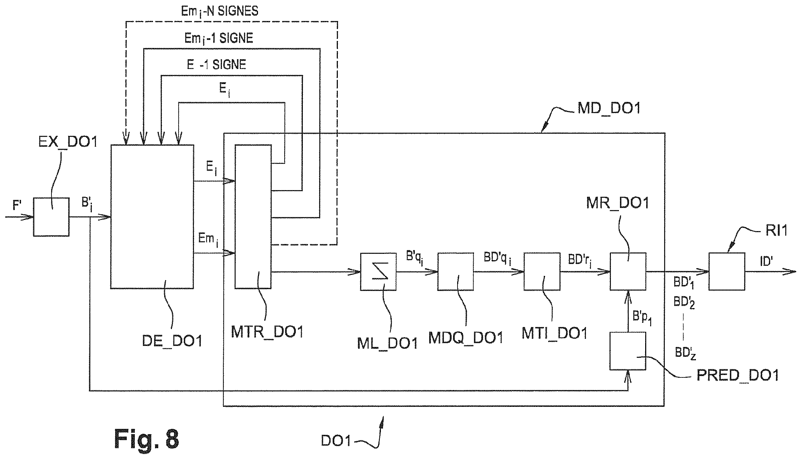

Selon le mode de réalisation de l'invention, le procédé de décodage selon l'invention est implémenté dans un dispositif de décodage ou décodeur DO1, tel que représenté à la **figure 8****,** lequel est apte à traiter le signal F' délivré par le codeur CO1 de la **figure 4****.**

Au cours d'une étape préliminaire non représentée sur la **figure 7****,** il est procédé à l'identification, dans le signal de données F' reçu, des partitions B'₁ à B'_{Z} qui ont été codées précédemment par le codeur CO1. Dans le mode préféré de réalisation, lesdites partitions sont des blocs qui ont une forme carrée et ont tous la même taille. En fonction de la taille de l'image qui n'est pas forcément un multiple de la taille des blocs, les derniers blocs à gauche et les derniers blocs en bas peuvent ne pas être carrés. Dans un mode alternatif de réalisation, les blocs peuvent être par exemple de taille rectangulaire et/ou non alignés les uns avec les autres.

Chaque bloc ou macrobloc peut par ailleurs être lui-même divisé en sous blocs qui sont eux-mêmes subdivisibles.

Une telle identification est effectuée par un module logiciel EX_DO1 d'analyse de flux, tel que représenté à la **figure 8****.**

Au cours d'une étape D1 représentée à la **figure 7****,** le module EX_DO1 de la **figure 8** sélectionne comme bloc courant B'ᵢ le premier bloc B'₁ à décoder. Une telle sélection consiste par exemple à placer un pointeur de lecture dans le signal F' au début des données du premier bloc B'₁.

Il est ensuite procédé au décodage de chacun des blocs codés sélectionnés.

Dans l'exemple représenté sur la **figure 7****,** un tel décodage est appliqué successivement à chacun des blocs codés B'₁ à B'_{Z}. Les blocs sont décodés selon par exemple un parcours « raster scan » bien connu de l'homme du métier.

Le décodage selon l'invention est mis en œuvre dans un module logiciel de décodage MD_DO1 du décodeur DO1, tel que représenté sur la **figure 8****.**

Au cours d'une étape D2 représentée à la **figure 7****,** il est d'abord procédé au décodage entropique du premier bloc courant B'₁, qui a été sélectionné. Une telle opération est effectuée par un module de décodage entropique DE_DO1 représenté sur la **figure 8****,** par exemple de type CABAC. Au cours de cette étape, le module DE_DO1 effectue un décodage entropique des informations numériques correspondant à l'amplitude de chacun des coefficients codés de la liste E₁ ou de la liste modifiée Em₁. A ce stade, seuls les signes des coefficients de la liste E₁ ou de la liste modifiée Em₁ ne sont pas décodés.

Au cours d'une étape D3 représentée à la **figure 7****,** il est procédé à la détermination du nombre de signes susceptibles d'avoir été cachés au cours de l'étape précédente de codage entropique C20. Une telle étape D3 est effectuée par un module logiciel de traitement MTR_DO1, tel que représenté sur la **figure 8****.** L'étape D3 est similaire à l'étape C7 précitée de détermination du nombre de signes à cacher.

Dans le mode préféré de réalisation, le nombre de signes cachés est un ou zéro. En outre, conformément audit mode de réalisation préféré, c'est le signe du premier coefficient non nul qui est caché. Dans l'exemple représenté, il s'agit donc du signe positif du coefficient ε2=+9.

Dans un mode de réalisation alternatif, le nombre de signes cachés est soit zéro, soit un, soit deux, soit trois, soit plus.

Conformément au mode de réalisation préféré de l'étape D3, il est procédé, au cours d'une première sous-étape D31 représentée à la **figure 7****,** à la détermination, à partir de ladite liste E₁ ou de la liste modifiée Em₁, d'une sous-liste contenant des coefficients ε'1, ε'2,..., ε'M où M<L susceptibles d'avoir été modifiés au codage.

Une telle détermination est effectuée de la même manière qu'à l'étape de codage C7 précitée.

Comme le module de traitement MTR_CO1 précité, le module de traitement MTR_DO1 est configuré initialement pour ne pas modifier :
- le ou les coefficients nuls situés avant le premier coefficient non nul,
- et pour des raisons de complexité de calcul, le ou les coefficients nuls situés après le dernier coefficient non nul.

Dans l'exemple représenté, à l'issue de la sous-étape D31, il s'agit de la sous-liste SEm₁ telle que SEm₁ = (9, -6, 0, 0, 1, 0, -1, 2, 0, 0, 1). En conséquence, onze coefficients susceptibles d'avoir été modifiés sont obtenus.

Au cours d'une sous-étape suivante D32 représentée à la **figure 7****,** le module de traitement MTR_DO1 procède à la comparaison du nombre de coefficients susceptibles d'avoir été modifiés avec un seuil prédéterminé TSIG. Dans le mode préféré de réalisation, TSIG vaut 4.

Si le nombre de coefficients susceptibles d'avoir été modifiés est inférieur au seuil TSIG, il est procédé, au cours d'une étape D4 représentée à la **figure 7****,** à un décodage entropique classique de tous les signes des coefficients de la liste E₁. Un tel décodage est effectué par le décodeur CABAC, désigné par la référence DE_DO1 sur la **figure 8****.** A cet effet, le signe de chaque coefficient non nul de la liste E₁ est décodé entropiquement.

Si le nombre de coefficients susceptibles d'avoir été modifiés est supérieur au seuil TSIG, il est procédé, au cours de ladite étape D4, au décodage entropique classique de tous les signes des coefficients de la liste Em₁, à l'exception du signe du premier coefficient non nul ε2.

Au cours d'une étape D5 représentée à la **figure 7****,** le module de traitement MTR_DO1 calcule la valeur d'une fonction f qui est représentative des coefficients de la sous-liste SEm₁ de façon à déterminer si la valeur calculée est paire ou impaire.

Dans le mode préféré de réalisation où un seul signe est caché dans le signal F', la fonction f est la parité de la somme des coefficients de la sous-liste SEm₁.

Conformément à la convention utilisée au codeur CO1, qui est la même au décodeur DO1, une valeur paire de la somme des coefficients de la sous-liste SEm₁ signifie que le signe du premier coefficient non nul de la liste modifiée Em₁ est positif, tandis qu'une valeur impaire de la somme des coefficients de la sous-liste SEm₁ signifie que le signe du premier coefficient non nul de la liste modifiée Em₁ est négatif.

Dans l'exemple de réalisation où SEm₁=(+9,-6,0,0,+1,0,-1,+2,0,0,+1), la somme totale des coefficients est égale à 6, et est donc paire. En conséquence, à l'issue de l'étape D5, le module de traitement MTR_DO1 en déduit que le signe caché du premier coefficient non nul ε2 est positif.

Au court d'une étape D6 représentée à la **figure 7****,** et à l'aide de toutes les informations numériques reconstruites au cours des étapes D2, D4 et D5, il est procédé à la reconstruction des coefficients quantifiés du bloc B'q₁ dans un ordre prédéfini. Dans l'exemple représenté, il s'agit d'un parcours en zigzag inverse au parcours en zigzag effectué au cours de l'étape de codage C6 précitée. Une telle étape est effectuée par un module logiciel de lecture ML_DO1, tel que représenté à la **figure 8****.** Plus précisément, le module ML_DO1 procède à l'inscription des coefficients de la liste E₁ (monodimensionnelle) dans le bloc B'q₁ (bidimensionnel), en utilisant ledit ordre de parcours en zigzag inverse.

Au cours d'une étape D7 représentée à la **figure 7****,** il est procédé à la déquantification du bloc résidu quantifié B'q₁ selon une opération classique de déquantification qui est l'opération inverse de la quantification effectuée au codage à l'étape C5 précitée, pour produire un bloc déquantifié décodé BD'q₁. Une telle étape est effectuée au moyen d'un module logiciel de déquantification MDQ_DO1, tel que représenté à la **figure 8****.**

Au cours d'une étape D8 représentée à la **figure 7****,** il est procédé à la transformation inverse du bloc déquantifié BD'q₁ qui est l'opération inverse de la transformation directe effectuée au codage à l'étape C4 précitée. Un bloc résidu décodé BD'r₁ est alors obtenu. Une telle opération est effectuée par un module logiciel MTI_DO1 de transformée inverse, tel que représenté **figure 8****.**

Au cours d'une étape D9 représentée à la **figure 7****,** il est procédé au décodage prédictif du bloc courant B'₁. Un tel décodage prédictif est effectué classiquement par des techniques connues de prédiction intra et/ou inter, au cours duquel le bloc B'₁ est prédit par rapport à au moins un bloc précédemment décodé. Une telle opération est effectuée par un module de décodage prédictif PRED_DO1 tel que représenté **figure 8****.**

Il va de soi que d'autres modes de prédiction intra tels que proposés dans la norme H.264 sont possibles.

Au cours de cette étape, le décodage prédictif est effectué à l'aide des éléments de syntaxe décodés à l'étape précédente et comprenant notamment le type de prédiction (inter ou intra), et le cas échéant, le mode de prédiction intra, le type de partitionnement d'un bloc ou macrobloc si ce dernier a été subdivisé, l'indice d'image de référence et le vecteur de déplacement utilisés dans le mode de prédiction inter.

Ladite étape de décodage prédictif précitée permet de construire un bloc prédit B'p₁.

Au cours d'une étape D10 représentée à la **figure 7****,** il est procédé à la construction du bloc décodé BD'₁ en ajoutant au bloc prédit B'p₁ le bloc résidu décodé BD'r₁. Une telle opération est effectuée par un module logiciel de reconstruction MR_DO1 représenté à la **figure 8****.**

Au cours d'une étape D11 représentée à la **figure 7****,** le module de décodage MD_DO1 teste si le bloc courant décodé est le dernier bloc identifié dans le signal F'.

Si le bloc courant est le dernier bloc du signal F', au cours d'une étape D12 représentée à la **figure 7****,** il est mis fin au procédé de décodage.

Si tel n'est pas le cas, il est procédé à la sélection du bloc suivant B'ᵢ à décoder conformément à l'ordre de parcours raster scan précité, par itération des étapes D1 à D10, pour 1≤i≤Z.

On va maintenant décrire, principalement en référence à la **figure 7****,** un autre mode de réalisation de l'invention.

Cet autre mode de réalisation se distingue du précédent uniquement par le nombre de coefficients cachés qui est soit 0, soit N, N étant un entier tel que N≥2.

A cet effet, la sous-étape de comparaison D32 précitée est remplacée par la sous-étape D32a représentée en pointillé sur la **figure 7****,** au cours de laquelle il est procédé à la comparaison du nombre de coefficients susceptibles d'avoir été modifiés avec plusieurs seuils prédéterminés 0<TSIG_1<TSIG_2<TSIG_3..., de telle façon que si le nombre desdits coefficients est compris entre TSIG_N et TSIG_N+1, N signes ont été cachés.

Si le nombre desdits coefficients est inférieur au premier seuil TSIG_1, il est procédé, au cours de l'étape D4 précitée, au décodage entropique classique de tous les signes des coefficients de la liste E₁. A cet effet, le signe de chaque coefficient non nul de la liste E₁ est décodé entropiquement.

Si le nombre desdits coefficients est compris entre le seuil TSIG_N et TSIG_N+1, il est procédé, au cours de l'étape D4 précitée, au décodage entropique classique de tous les signes des coefficients de la liste E₁, à l'exception des N signes respectifs des premiers coefficients non nuls de ladite liste modifiée Em₁, lesdits N signes étant cachés.

Dans cet autre mode de réalisation, le module de traitement MTR_DO1 calcule, au cours de l'étape D5, la valeur de la fonction f qui est le reste modulo 2^{N} de la somme des coefficients de la sous-liste SEm₁. On suppose que dans l'exemple proposé, N=2.

Le module de traitement MTR_DO1 en déduit alors la configuration des deux signes cachés qui sont affectés respectivement à chacun des deux premiers coefficients non nuls ε2 et ε3, selon la convention utilisée au codage.

Une fois ces deux signes reconstruits, il est procédé à la réalisation des étapes D6 à D12 décrites ci-dessus.

Il va de soi que les modes de réalisation qui ont été décrits ci-dessus ont été donnés à titre purement indicatif.

L'invention est définie par les revendications annexées.

Ainsi par exemple, selon un mode de réalisation simplifié par rapport à celui représenté à la **figure 4****,** le codeur CO1 pourrait être configuré pour cacher au moins N' signes prédéterminés, avec N'≥1, au lieu de soit zéro, soit un ou N signes prédéterminés. Dans ce cas, l'étape de comparaison C72 ou C72a serait supprimée. De façon correspondante, selon un mode de réalisation simplifié par rapport à celui représenté à la **figure 8****,** le décodeur DO1 serait configuré pour reconstruire N' signes prédéterminés au lieu de soit zéro, soit un ou N signes prédéterminés. Dans ce cas, l'étape de comparaison D32 ou D32a serait supprimée. En outre, le critère de décision appliqué à l'étape de codage C72 et à l'étape de décodage D32 pourrait être remplacé par un autre type de critère. A cet effet, au lieu de comparer à un seuil le nombre de coefficients modifiables ou le nombre de coefficients susceptibles d'avoir été modifiés, le module de traitement MTR_CO1 ou MTR_DO1 pourrait appliquer un critère de décision qui est respectivement fonction de la somme des amplitudes des coefficients modifiables ou susceptibles d'avoir été modifiés, ou encore du nombre de zéros présents parmi les coefficients modifiables ou susceptibles d'avoir été modifiés.

## Revendications

1. Procédé de décodage d'un signal de données représentatif d'au moins une image découpée en partitions qui a été précédemment codée, les partitions comprenant une partition courante (Bi) à décoder contenant des données dont au moins une donnée est affectée d'un signe, les données étant les coefficients de transformation directe, le procédé de décodage comprenant :
- décodage entropique (D2) de la première partition courante (Bi),
- détermination, (D3) sur la base des données décodées non nulles de la partition courante, si le signe d'au moins une donnée est caché,
- calcul (D5) de la valeur de parité d'une somme de données décodées de la partition courante (Bi),
- obtention, à partir de ladite valeur de parité, de la valeur dudit signe, si la parité de la somme des données a une première valeur le signe est positif et si la parité de la somme des données a une deuxième valeur le signe est négatif,
- reconstruction (D6), sur la base de cela, des coefficients quantifiés de la partition courante (Bi) dans un ordre prédéfini, et
- déquantification (D7) des coefficients quantifiés de la partition courante (Bi) de manière à produire un bloc déquantifié et décodé.

2. Le procédé de décodage selon la revendication 1, dans lequel l'obtention de la valeur dudit signe caché du premier coefficient non nul (e2) est déduite par un module de traitement (MTR_D01).

3. Le procédé de décodage selon la revendication 2, dans lequel le module de traitement (MTR_D01) calcule la valeur d'une fonction f qui est représentative des coefficients d'une sous-liste de données décodées de la partition courante de façon à déterminer si la valeur calculée est paire ou impaire.

4. Le procédé de décodage selon la revendication 1, au cours duquel une pluralité de valeurs associées respectivement à une pluralité (N) de signes est obtenue à partir de ladite valeur calculée.

5. Le procédé de décodage selon la revendication 1, dans lequel l'ordre prédéfini est un parcours en zigzag.

## Patentansprüche

1. Verfahren zum Dekodieren eines Datensignals, das mindestens ein Bild repräsentiert, das in Partitionen unterteilt ist, die zuvor codiert wurden, wobei die Partitionen eine aktuelle Partition (Bi) umfassen, die decodiert werden soll, die Daten enthält, von denen mindestens einem Datenelement ein Vorzeichen zugewiesen ist, wobei die Daten die direkten Transformationskoeffizienten sind, wobei das Decodierverfahren Folgendes umfasst:
- Entropiedecodierung (D2) der ersten aktuellen Partition (Bi),
- Bestimmung (D3), auf der Grundlage der decodierten Daten, die nicht null sind, der aktuellen Partition, ob das Vorzeichen mindestens eines Datenelements verborgen ist,
- Berechnung (D5) des Paritätswerts einer Summe der decodierten Daten der aktuellen Partition (Bi),
- Erhalten, ausgehend von dem Paritätswert, des Werts des Vorzeichens, wobei, falls die Parität der Summe der Daten einen ersten Wert aufweist, das Vorzeichen positiv ist, und, falls die Parität der Summe der Daten einen zweiten Wert aufweist, das Vorzeichen negativ ist,
- Rekonstruierung (D6), basierend darauf, der quantisierten Koeffizienten der aktuellen Partition (Bi) in einer vordefinierten Reihenfolge und
- Dequantisierung (D7) der quantisierten Koeffizienten der aktuellen Partition (Bi) zum Erzeugen eines dequantisierten und decodierten Blocks.

2. Decodierverfahren nach Anspruch 1, wobei der Erhalt des Werts des verborgenen Vorzeichens des ersten Koeffizienten (e2), der nicht null ist, durch ein Verarbeitungsmodul (MTR_D01) abgeleitet wird.

3. Decodierverfahren nach Anspruch 2, wobei das Verarbeitungsmodul (MTR_D01) den Wert einer Funktion f berechnet, die die Koeffizienten einer Unterliste der decodierten Daten der aktuellen Partition repräsentiert, um somit zu bestimmen, ob der berechnete Wert gerade oder ungerade ist.

4. Decodierverfahren nach Anspruch 1, während dessen eine Vielzahl von Werten, die jeweils mit einer Vielzahl (N) von Vorzeichen assoziiert ist, aus dem berechneten Wert erhalten wird.

5. Dekodierverfahren nach Anspruch 1, wobei die vordefinierte Reihenfolge ein Zickzack-Pfad ist.

## Claims

1. Method for decoding a data signal representative of at least one image subdivided into partitions which has previously been coded, the partitions comprising a current partition (Bi) to be decoded containing data of which at least one datum is assigned a sign, the data being the direct transformation coefficients, the decoding method comprising:
- entropic decoding (D2) of the first current partition (Bi),
- determination (D3), on the basis of the non-zero decoded data of the current partition, whether the sign of at least one datum is hidden,
- computation (D5) of the parity value of a sum of the decoded data of the current partition (Bi),
- obtaining, from said parity value, of the value of the said sign, if the parity of the sum of the data has a first value the sign is positive and if the parity of the sum of the data has a second value the sign is negative,
- reconstruction (D6) on the basis thereof, of the quantified coefficients of the current partition (Bi) in a predefined order, and
- dequantification (D7) of the quantified coefficients of the current partition (Bi) so as to produce a dequantified and decoded block.

2. Decoding method according to Claim 1, in which the obtaining of the value of said hidden sign of the first non-zero coefficient (e2) is deduced by a processing module (MTR_D01).

3. Decoding method according to Claim 2, in which the processing module (MTR_D01) computes the value of a function f which is representative of the coefficients of a sublist of the decoded data of the current partition so as to determine if the computed value is even or odd.

4. Decoding method according to Claim 1, during which a plurality of values associated respectively with a plurality (N) of signs is obtained from said computed value.

5. Decoding method according to Claim 1, in which the predefined order is a zigzag path.
